# FASCICULE DE BREVET EUROPEEN

(11) **EP 4 207 824 B1**
(45) Date de publication et mention de la délivrance du brevet: **25.11.2026**
(21) Numéro de dépôt: 22216682.9
(22) Date de dépôt: 26.12.2022
(51) Int. Cl.: H04W 4/08, H04W 4/90, H04W 12/00

(54) **PROCÉDÉ D'INITIATION DE COMMUNICATION AU SEIN D'UN REGROUPEMENT DE GROUPES DE COMMUNICATION DANS UN RÉSEAU 3GPP MCS**
VERFAHREN ZUR INITIIERUNG EINER KOMMUNIKATION IN EINEM CLUSTER VON KOMMUNIKATIONSGRUPPEN IN EINEM 3GPP MCS-NETZWERK
METHOD FOR INITIATING COMMUNICATION WITHIN A GROUPING OF COMMUNICATION GROUPS IN A 3GPP MCS NETWORK

(30) Priorité: 30.12.2021 FR 2114662
(43) Date de publication de la demande: 05.07.2023
(73) Titulaire: Airbus DS SLC, 78990 Elancourt (FR)
(72) Inventeur: PIROARD, François, Elancourt (FR)
(74) Mandataire: Cabinet Camus Lebkiri

(56) Documents cités:
- EP-A1- 3 731 544
- US-A1- 2021 044 937
- "LTE; Mission Critical (MC) services over LTE; Part 1: Common test environment (3GPP TS 36.579-1 version 15.3.1 Release 15)", vol. 3GPP RAN, no. V15.3.1, 21 October 2021 (2021-10-21), pages 1 - 549, XP014417409, Retrieved from the Internet <URL:http://www.etsi.org/deliver/etsi_ts/136500_136599/13657901/15.03.01_60/ts_13657901v150301p.pdf> [retrieved on 20211021]
- "3rd Generation Partnership Project; Technical Specification Group Radio Access Network; Mission Critical (MC) services over LTE; Part 1: Common test environment (Release 15)", 6 October 2021 (2021-10-06), XP052059641, Retrieved from the Internet <URL:https://ftp.3gpp.org/tsg_ran/WG5_Test_ex-T1/Working_documents/draft_specs_with_CRs_implemented/after_RAN5-92/clean/36579-1-f30.zip 36579-1-f30.docx> [retrieved on 20211006]

## Description

### DOMAINE TECHNIQUE DE L'INVENTION

Le domaine technique de l'invention est celui des télécommunications.

La présente invention concerne un procédé d'initiation d'appel au sein d'un regroupement de groupes de communication dans un réseau 3GPP MCS, et en particulier dans le cas de groupes de communications répartis dans plusieurs systèmes interconnectés par des passerelles.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en œuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

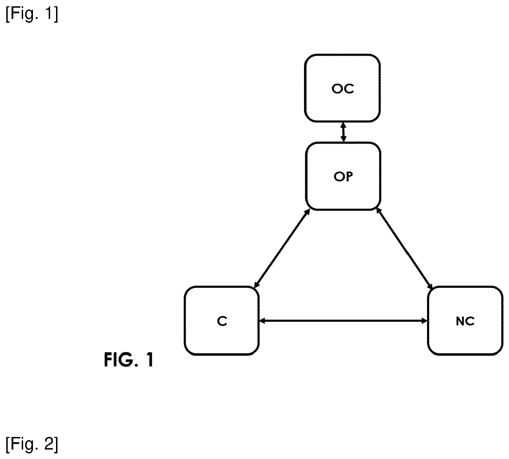

Un tel réseau est par exemple représenté à la Figure 1. Ce réseau comprend un client originel OC (pour « Originating Client » selon la dénomination du 3GPP MCS en anglais) connecté à un serveur participant originel OP (pour « Originating Participating » selon la dénomination du 3GPP MCS en anglais). Le serveur participant OP peut communiquer avec d'autres serveurs du réseau. A la Figure 1, le serveur participant OP peut communiquer avec un serveur Contrôleur C (pour « Controlling » selon la dénomination du 3GPP MCS en anglais) et avec un serveur Non-Contrôleur (pour « Non Controlling » selon la dénomination du 3GPP MCS en anglais). Les serveurs participant OP, contrôleur C et non-contrôleur NC sont des serveurs de type « MCX servers » tels que définis dans le 3GPP MCS.

Le serveur Non-Contrôleur NC et le serveur Contrôleur C peuvent aussi communiquer entre eux. Le serveur participant OP est un serveur qui a en charge la gestion du client originel OC. Le serveur Contrôleur C a en charge la gestion d'un groupe de communications au sein duquel le client originel OC souhaite communiquer. Le serveur Non-Contrôleur NC peut être vu comme un sous-serveur du groupe de communications au sein duquel le client originel OC souhaite communiquer et a en charge la gestion d'un des groupes « constituant » d'un regroupement de groupes de communication.

On entend par « réseau de communication selon le standard 3GPP MCS », un réseau de communication compatible avec le standard 3GPP MCS et plus particulièrement avec la version actuelle du 3GPP qui est la version 17, avec les versions précédentes à partir de la version 13 et avec les versions suivantes intégrant toutes les caractéristiques de l'invention.

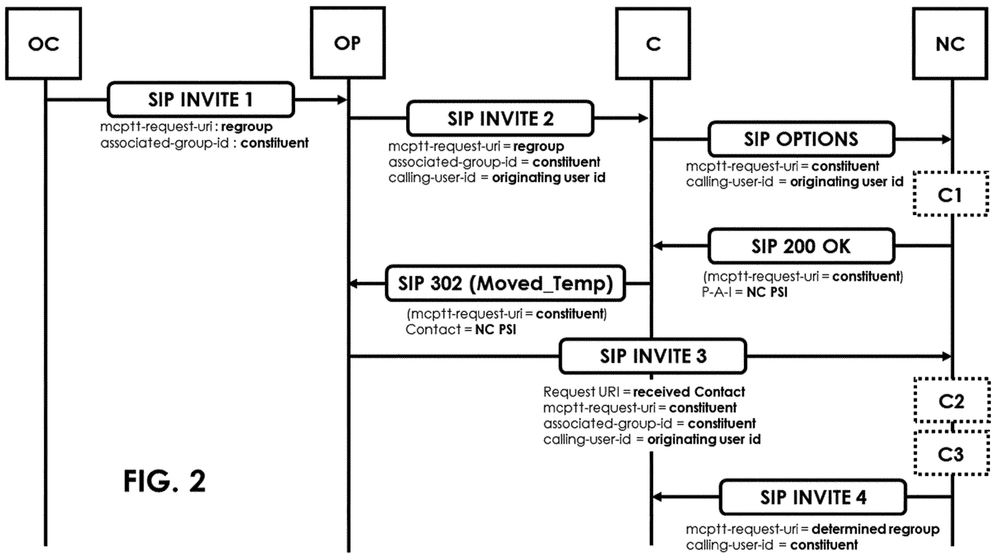

Lorsque le client originel OC souhaite initier un appel dans un groupe global GA regroupant un groupe de communication G1 auquel le client OC appartient et un groupe de communication G2 auquel le client OC n'appartient pas, une procédure d'initiation d'appel au sein d'un regroupement de groupes de communications selon le standard 3GPP MCS est mis en œuvre. Une telle procédure est représentée à la Figure 2 et la dernière version de la procédure est définie dans la spécification technique 24.379 version 17.5.0. Cette procédure s'applique aussi bien pour des groupes de communication issus de regroupement de groupes de communication, ou pour des groupes de communication temporaires.

Comme montré à la Figure 2, le client originel OC envoie un message « SIP INVITE 1 » au serveur participant OP de son groupe de communication G1. SIP est un protocole d'initiation de session (« Session Initiation Protocol » en anglais). Le message SIP INVITE, défini par la RFC 3261, est un message d'invitation d'un autre client à participer à une session. Dans le cadre du standard 3GPP MCS, ce message comprend un champ <mcptt-request-uri> indiquant au serveur destinataire, c'est-à-dire au serveur participant OP, le groupe global de regroupement (« regroup ») au sein duquel le client originel OC souhaite initier une communication, c'est-à-dire le groupe global GA dans cet exemple.

Le SIP INVITE 1 comprend aussi un champ <associated-group-id> indiquant à quel groupe de communication compris dans le groupe global GA le client OC appartient. Dans l'exemple présent, le groupe G1 du client originel OC compris dans le groupe global GA est appelé « constituent », appelé ainsi car il fait partie des deux groupes « constituant » le groupe global GA.

Le serveur participant OP reçoit le message SIP INVITE 1 et envoie un message SIP INVITE 2 au serveur Contrôleur du groupe global GA regroupant les groupes G1 et G2. Le message SIP INVITE 2 comprend les mêmes champs remplis de la même façon que le message SIP INVITE 1 et comprend en outre un champ « calling-user-id » indiquant l'identifiant de l'utilisateur originel, c'est-à-dire du client originel OC. En pratique, le serveur participant OP ne fait pas la distinction entre le message SIP INVITE pour un groupe normal ou pour un groupe de regroupement/temporaire, et transmet le message SIP INVITE 2 au serveur Contrôleur du groupe global GA, sur la base de l'élément <mcptt-request-uri>, comme pour un groupe normal, en ignorant l'élément <associated-group-id>.

Le serveur contrôleur C du groupe global GA reçoit le message SIP INVITE 2 et envoie alors un message SIP OPTIONS au serveur Non-contrôleur NC du groupe constitutif identifié dans le champ <associated-group-id> du message SIP INVITE 2 reçu, c'est-à-dire au serveur Non-contrôleur NC du groupe G1, pour vérifier si le client originel OC est autorisé à initier l'appel. Dans une variante, le champ <associated-group-id> peut être omis et le serveur contrôleur C envoie le message SIP OPTIONS à tous les serveurs Non-contrôleurs NC des groupes constituant le groupe global GA.

Le message SIP OPTIONS, défini par la RFC 3261, est un message permettant à une entité du réseau de connaître les capacités d'une autre entité du réseau.

Dans la procédure présentée ici, le message SIP OPTIONS comprend un champ <mcptt-request-uri> indiquant l'identité du groupe constitutif « constituent » provenant du champ <associated-group-id> du SIP INVITE 2, ici le groupe G1 auquel appartient le client originel OC. Le message SIP OPTIONS comprend aussi un champ <calling-user-id> comprenant l'identifiant du client originel OC « originating user id ».

Le serveur Non-contrôleur NC du groupe G1 recevant ce message SIP OPTIONS met alors en œuvre une procédure C1 de vérification que le client originel OC est membre du groupe constitutif reçu (ici G1) et qu'il est autorisé à lancer une session de groupe préarrangée (« pre-arranged ») ou en mode chat, et renvoie une réponse sous la forme d'un message SIP 200 indiquant que la requête est une réussite, au serveur contrôleur C, avec un champ d'en-tête <P-Asserted-Identity> défini sur le PSI (« Public Service Identity » selon la dénomination anglo-saxonne pour « Identité de Service Publique ») du serveur non-contrôleur NC.

Le serveur contrôleur C utilise les informations de la réponse SIP 200 pour renvoyer une réponse SIP 302 « Moved Temporarily » (« déplacé temporairement » en français) au serveur participant originel OP. La réponse SIP 302 comprend l'identité du groupe constitutif dans l'élément <mcptt-request-uri>, et le PSI du serveur non-contrôleur C dans un champ d'en-tête <contact>, recopié depuis le champ <P-Asserted-Identity> du message SIP 200 reçu.

Le serveur participant originel OP utilise les informations du message SIP 302 reçu et réachemine le SIP INVITE, via un message SIP INVITE 3 vers le serveur non-contrôleur NC, en utilisant le PSI reçu dans le champ <contact> et l'identité du groupe constitutif reçue dans le champ <mcptt-request-uri> de la réponse SIP 302. Ce message SIP INVITE 3 comprend ainsi les champs suivants :
- <Request URI> = received Contact, indiquant le PSI du serveur Non-contrôleur NC,
- <mcptt-request-uri> = constituent, indiquant l'identité du groupe constitutif
- <associated-group-id> = constituent, indiquant l'identité du groupe constitutif
- <calling-user-id> = originating user id, indiquant l'identité du client originel OC

Le serveur non-contrôleur NC vérifie alors à nouveau que le client originel OC est autorisé à lancer une session de groupe préétablie dans un procédure C2 et détermine, dans une procédure C3, quel est le groupe de regroupement ou le groupe temporaire dans lequel le groupe constitutif (reçu dans l'élément <mcptt-request-uri> du participant originel OP) a été regroupé et envoie une invitation SIP INVITE 4 au serveur contrôleur C du groupe de regroupement, ici le groupe global GA.

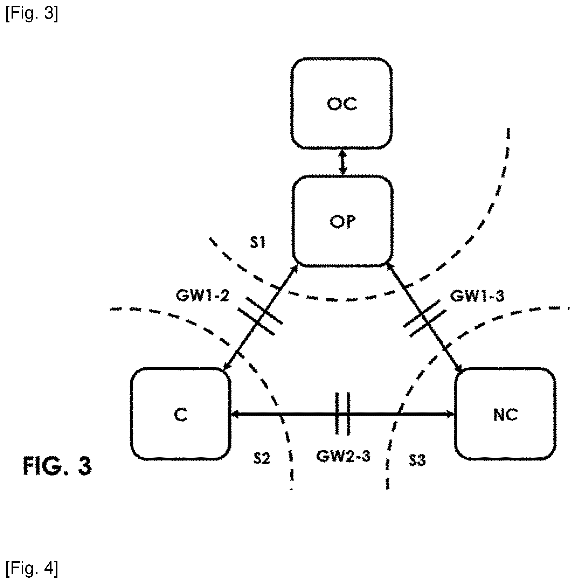

Dans cette procédure, des problèmes apparaissent lorsque les entités sont comprises dans des systèmes différents interconnectés, par exemple dans des systèmes de nationalité ou d'organisations différentes. Il devient alors parfois impossible pour ces entités de communiquer entre eux. Pour illustrer ce problème, un réseau de communication selon le standard 3GPP MCS est représenté schématiquement à la Figure 3. Une telle architecture est décrite par exemple dans les spécifications techniques TS23.280 v17.8.0 et TS24.379 V17.4.0, section 5.5 du standard 3GPP MCS.

Les systèmes de communication S1, S2 et S3 représentés à la Figure 1 forment un réseau selon le standard 3GPP MCS. Le système S1 comprend par exemple le client originel OC et le serveur participant originel OP.

Pour des besoins de confidentialité, des passerelles (aussi appelées « gateway » en anglais) sont nécessaires. Les passerelles GW1-2, GW1-3 et GW2-3 sont respectivement situées entre les systèmes S1 et S2, S1 et S3 et S2 et S3. Pour illustrer un problème qui intervient dû à la présence de ces passerelles, le procédé d'initiation d'appel dans un regroupement de groupes de communication de la Figure 2 sera décrit en la présence de ces passerelles.

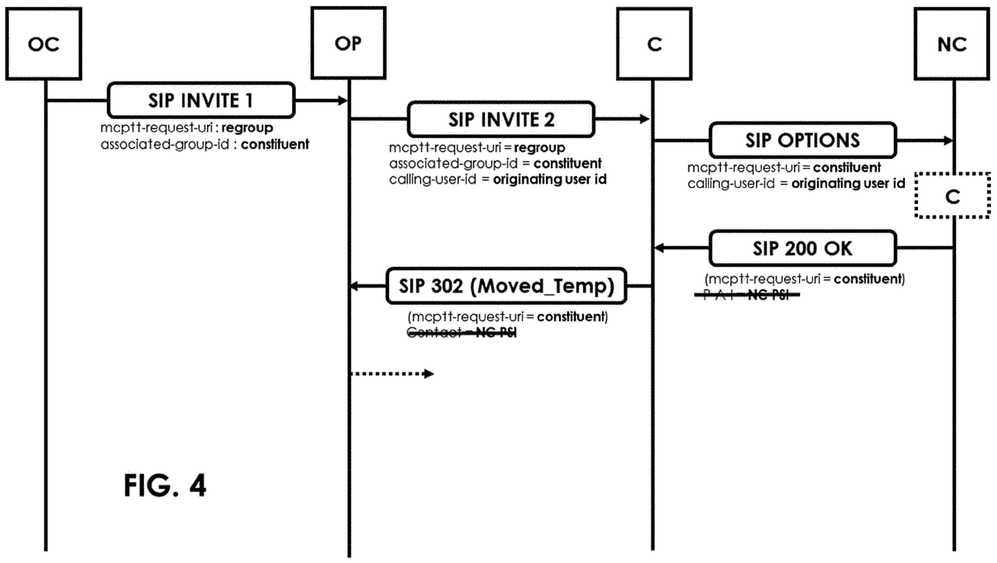

Un procédé d'initiation de regroupement de groupes de communication du standard 3GPP MCS dans un réseau comprenant des systèmes interconnectés par des passerelles est représenté schématiquement à la Figure 4.

Les passerelles GW1-2, GW1-3 et GW2-3 ont pour mission de préserver la confidentialité des différents systèmes S1 à S3. Pour cela, elles sont configurées pour supprimer, modifier, masquer ou remplacer certaines informations en sortie des systèmes. Ces passerelles peuvent être en deux parties, par exemple en comprenant deux passerelles : une passerelle à la « sortie » du système traitant les informations sortant du système et une passerelle à l'« entrée » du système traitant les informations entrant dans le système. Ces passerelles sont configurées pour traiter les données sensibles, par exemple un identifiant d'un client d'un système, pour que cet identifiant ne soit pas connu du système de destination, par exemple car le système d'origine n'a pas confiance dans le système de destination.

Le procédé d'initiation d'appel dans un regroupement de groupes représenté à la Figure 4 est identique au procédé de la Figure 2 jusqu'au message SIP OPTIONS envoyé au serveur non-contrôleur NC, c'est-à-dire qu'il comprend les mêmes étapes d'envoi du message SIP INVITE 1, du message SIP INVITE 2 puis du message SIP OPTIONS comprenant les mêmes champs que dans le procédé de la Figure 2. En effet, ces étapes ne comprennent pas d'informations sensibles devant être ou étant masquées ou supprimées par les passerelles.

Lorsque le serveur non-contrôleur NC appartenant au système S3 renvoie la réponse SIP 200 OK au message SIP OPTIONS à destination du serveur contrôleur C appartenant au système S2, la passerelle GW2-3 remplace le PSI que le non-contrôleur NC avait placé dans le champ d'en-tête <P-Asserted-Identity> par sa propre URI, c'est-à-dire par l'URI (de l'anglais « Uniform Resource Identifier » pour « identifiant uniforme de ressource ») de la passerelle GW2-3, car le PSI du serveur non-contrôleur NC ne peut pas être exposé au serveur contrôleur C pour des raisons de confidentialité.

Ainsi, lorsque le serveur contrôleur C appartenant au système S2 envoie sa réponse SIP 302 au serveur participant originel OP appartenant au système S1, le champ d'en-tête <Contact> contiendra l'URI de la passerelle GW2-3 et non le PSI du serveur non-contrôleur NC. La passerelle GW1-2 pourrait en outre considérer que l'URI dans le champ d'en-tête <Contact> est une information sensible et soit le remplacer par son propre URI, soit supprimer ce champ d'en-tête.

Le résultat est que le serveur participant originel OP ne recevra, dans la réponse SIP 302, aucune information lui permettant d'acheminer correctement le SIP INVITE 3 vers le serveur non-contrôleur NC. L'information reçue pourrait être "indéterminée" si le champ d'en-tête <Contact> est supprimé par la passerelle GW1-2, ou ce pourrait être l'URI de la passerelle GW1-2, ou encore de la passerelle GW2-3 si le champ d'en-tête <Contact> n'a pas été modifié par la passerelle GW1-2. Dans tous les cas, le serveur participant originel OP ne recevra pas le PSI du serveur non-contrôleur NC ni l'URI de la passerelle GW1-3, qui aurait pu lui permettre d'atteindre le serveur non-contrôleur NC.

Ainsi, lorsque les différentes fonctions de cette procédure sont réalisées dans des systèmes différents dans des domaines différents, la procédure de l'état de l'art ne permet pas de router correctement le SIP INVITE 3 vers le serveur Non-contrôleur NC via la passerelle appropriée, ni même directement s'ils sont dans le cas où le serveur non-contrôleur NC et le serveur participant originel OP seraient dans le même système mais que le groupe de regroupement ne l'est pas. Ainsi, dans le cas d'une telle architecture, prévue par le standard 3GPP MCS, il n'est pas possible pour un client originel OC d'initier une communication au sein d'un regroupement de groupes de communication.

Le document US2021044937A1 mentionne un groupe global de communication regroupant deux groupes de communication, par exemple A et B dans la Figure 3. Un dispositif d'interconnexion 10 est situé entre les serveurs locaux 20 et 30, qui comprennent chacun des modules de gestion du groupe respectivement A et B qu'ils définissent.

Il existe donc un besoin de pouvoir fournir un tel service, ne présentant pas les inconvénients précités.

### RESUME DE L'INVENTION

L'invention offre une solution aux problèmes évoqués précédemment, en permettant à une entité comprise dans un système différent du système dans lequel un serveur Contrôleur d'un regroupement de groupes de communication ou d'un groupe temporaire est compris, d'initier une communication au sein du regroupement de groupes de communication ou du groupe temporaire.

Un aspect de l'invention concerne un procédé d'initiation, par une première entité cliente, d'une communication au sein d'un groupe global de communication regroupant au moins un premier groupe de communication et au moins un deuxième groupe de communication, au moins une deuxième entité cliente étant affiliée au deuxième groupe de communication, le procédé étant mis en œuvre dans un réseau de communication selon le standard 3GPP MCS « 3rd Generation Partnership Program Mission-Critical System », le réseau comprenant au moins :
- la première entité cliente affiliée au premier groupe de communication,
- un serveur participant originel gérant la première entité cliente au sein du premier groupe de communication
- un serveur contrôleur étant en charge de la gestion du groupe global de communication,
- au moins un serveur non-contrôleur du groupe global de communication étant en charge de la gestion du premier groupe de communication,
la première entité cliente et le serveur participant originel étant compris dans au moins un premier système, le serveur contrôleur étant compris dans un deuxième système, le premier et le deuxième système étant séparés par au moins une passerelle, le procédé comprenant les étapes de :
- Transmission, par la première entité cliente au serveur participant, d'un premier message d'invitation selon le protocole d'initiation de session SIP, le message d'invitation comprenant :
   - au moins un champ d'en-tête comprenant une information de groupe constituant, l'information de groupe constituant identifiant le groupe de communication auquel la première entité cliente est affiliée, et
   - au moins un champ d'en-tête comprenant une information de groupe appelé, l'information de groupe appelé identifiant le groupe global de communication,
- Sélection, par le serveur participant, du serveur non-contrôleur du groupe de communication auquel la première entité cliente est affiliée, à partir de l'information de groupe constituant, le serveur non-contrôleur sélectionné appartenant au groupe identifié par l'information de groupe constituant,
- Détermination, par le serveur participant, d'un identifiant du serveur non-contrôleur sélectionné,
- Transmission, par le serveur participant au serveur non-contrôleur sélectionné, d'un deuxième message d'invitation selon le protocole d'initiation de session SIP, le message d'invitation comprenant :
   - au moins un champ d'en-tête comprenant une information de serveur destinataire, l'information de serveur destinataire comprenant l'identifiant du serveur non-contrôleur sélectionné, et
   - au moins un champ d'en-tête comprenant une information d'utilisateur originel, l'information d'utilisateur originel comprenant un identifiant de la première entité cliente,
   - au moins un champ d'en-tête comprenant l'information de groupe constituant,
   - au moins un champ d'en-tête comprenant l'information de groupe appelé,
- Vérification, par le serveur non-contrôleur, que la première entité cliente est autorisée à initier la communication au sein du groupe global de communication à partir de l'information d'utilisateur originel,
- Sélection, par le serveur participant non-contrôleur, du serveur contrôleur du groupe global de communication,
- Transmission, par le serveur non-contrôleur au serveur contrôleur, d'un troisième message d'invitation selon le protocole d'initiation de session SIP le message d'invitation comprenant :
   - au moins un champ d'en-tête comprenant l'information de groupe constituant,
   - au moins un champ d'en-tête comprenant l'information de groupe appelé.
- Invitation, par le serveur contrôleur du groupe global de communication, de chaque entité cliente du groupe global de communication à participer à la communication à partir de l'information de groupe appelé.

Grâce à l'invention, le procédé d'initiation du standard 3GPP MCS est simplifié tout en permettant de résoudre les problèmes liés à des serveurs compris dans des systèmes différents interconnectés par des passerelles. En effet, dans le procédé selon l'invention et au contraire de l'état de l'art, le serveur participant route directement le message d'invitation selon le protocole SIP vers le serveur non-contrôleur du groupe de communication de l'entité cliente initiant la communication, permettant d'éviter les suppressions de données par les passerelles, et de limiter les échanges entre serveurs, rendant le procédé d'initiation plus rapide et plus sûr.

Outre les caractéristiques qui viennent d'être évoquées dans le paragraphe précédent, le procédé d'initiation de communication selon un aspect de l'invention peut présenter une ou plusieurs caractéristiques complémentaires parmi les suivantes, considérées individuellement ou selon toutes les combinaisons techniquement possibles :
- le serveur contrôleur est compris dans un troisième système, le premier et le troisième système étant séparés par une deuxième passerelle, le deuxième et le troisième système étant séparés par une troisième passerelle.
- l'étape de vérification se base en outre sur l'information de groupe constituant et sur l'information de groupe appelé.
- l'étape de vérification par le serveur non-contrôleur comprend en outre au moins la vérification que la première entité cliente est bien affiliée au premier groupe de communication à partir de l'information de groupe constituant et de l'information d'utilisateur originel.
- l'étape de vérification par le serveur non-contrôleur comprend en outre au moins la vérification que le premier groupe de communication est compris dans le groupe global de communication à partir de l'information de groupe constituant et de l'information de groupe appelé.
- le troisième message d'invitation selon le protocole d'initiation de session SIP comprend en outre au moins un champ d'en-tête comprenant l'information d'utilisateur originel.
- l'étape d'invitation par le serveur contrôleur du groupe global de communication, de chaque entité cliente du groupe global de communication à participer à la communication à partir de l'information de groupe appelé comprend au moins un champ d'en-tête comprenant l'information d'utilisateur originel.

Un autre aspect de l'invention concerne un réseau de communication selon le standard 3GPP MCS « 3rd Generation Partnership Program Mission-Critical System », le réseau de communication étant formé par au moins :
- un premier système comprenant au moins une première entité cliente et au moins un serveur participant,
- un deuxième système comprenant au moins un serveur contrôleur d'un groupe global de communication,

le réseau comprenant le groupe global de communication formé par au moins un premier groupe de communication et au moins un deuxième groupe de communication,
   - la première entité cliente étant affiliée au premier groupe de communication,
   - le serveur participant originel gérant la première entité cliente au sein du premier groupe de communication,
   - le serveur contrôleur étant en charge de la gestion du groupe global de communication,
   - au moins un serveur non-contrôleur du groupe global de communication compris dans le réseau étant en charge de la gestion du premier groupe de communication,
le premier et le deuxième système étant séparés par au moins une passerelle, le réseau de communication étant configuré pour mettre en œuvre le procédé d'initiation de communication selon l'invention.

Dans un mode de réalisation, le réseau comprend un troisième système, le serveur contrôleur étant compris dans le troisième système, le premier et le troisième système étant séparés par une deuxième passerelle, le deuxième et le troisième système étant séparés par une troisième passerelle.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau selon le standard 3GPP MCS,
- La figure 2 montre une représentation schématique d'un procédé d'initiation de communication au sein d'un regroupement de groupes de communication selon le standard 3GPP MCS,
- La figure 3 montre une représentation schématique d'un réseau selon le standard 3GPP MCS formé de plusieurs systèmes interconnectés,
- La figure 4 montre une représentation schématique d'un procédé d'initiation de communication au sein d'un regroupement de groupes de communication selon le standard 3GPP MCS formé de plusieurs systèmes interconnectés,
- La figure 5 montre une représentation schématique d'un réseau comprenant un regroupement de groupes de communication selon l'invention,
- La figure 6 montre une représentation schématique d'un procédé d'initiation de communication selon l'invention,
- La figure 7 montre une autre représentation schématique d'un procédé d'initiation de communication selon l'invention.

### DESCRIPTION DETAILLEE

Sauf précision contraire, un même élément apparaissant sur des figures différentes présente une référence unique.

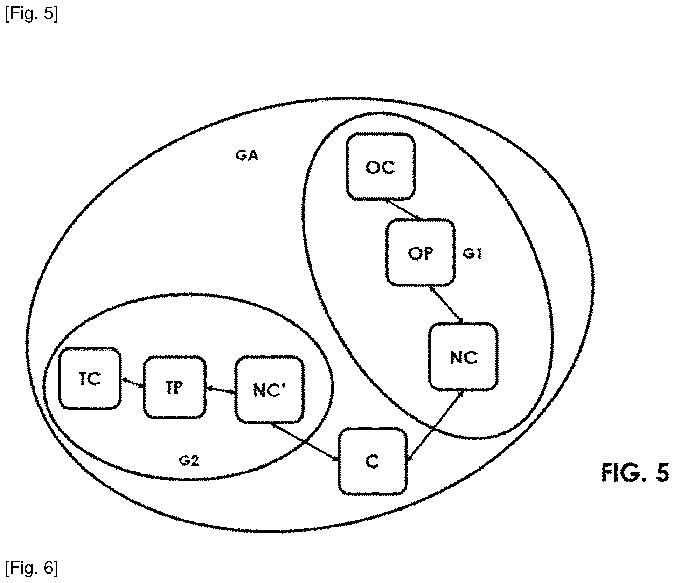

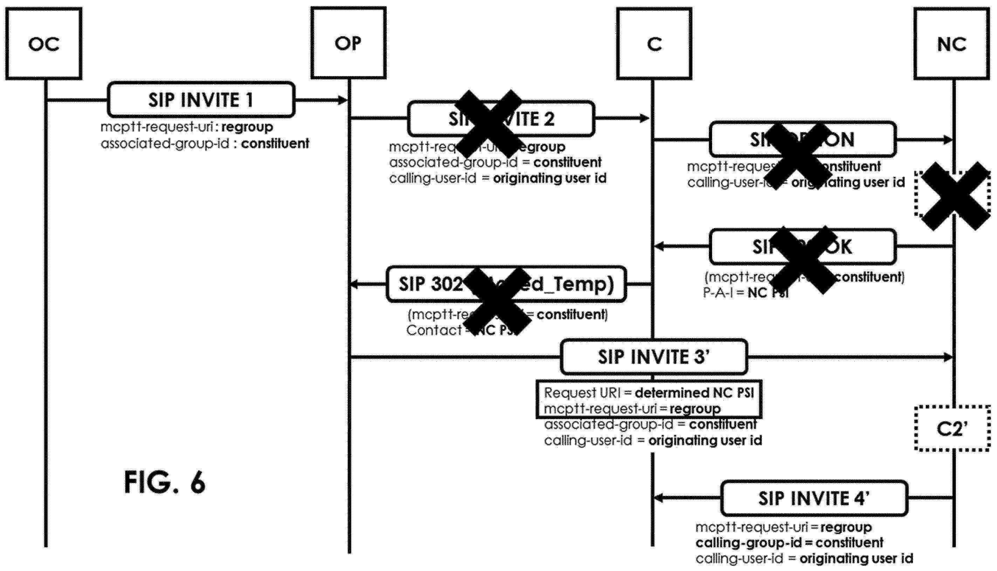

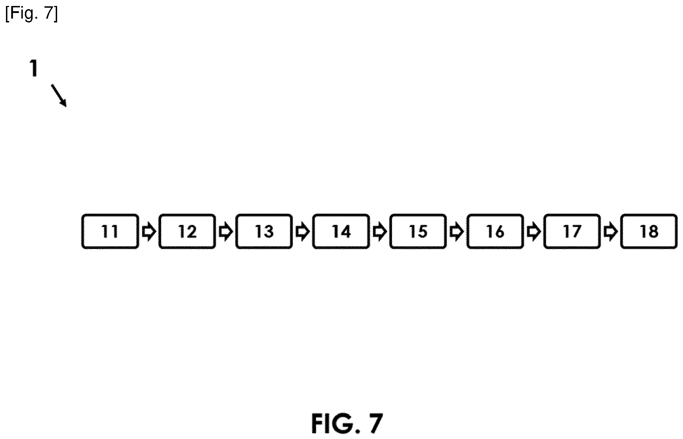

Les Figures 6 et 7 montrent chacune une représentation schématique du procédé selon l'invention. Les Figures 6 et 7 montrent une représentation différente du même procédé selon l'invention. Le procédé selon l'invention est mis en œuvre par le réseau représenté à la Figure 5.

Le procédé représenté aux Figures 6 et 7 est un procédé d'initiation de communication selon l'invention au sein d'un regroupement de groupes communication.

Le réseau représenté à la Figure 5 configuré pour mettre en œuvre le procédé selon l'invention est un réseau selon le standard 3GPP MCS, c'est-à-dire qu'il est implémenté en suivant les spécifications définies par le standard 3GPP MCS.

Le réseau de la Figure 5 comprend un groupe global de communication GA regroupant deux groupes de communication G1 et G2. Une entité cliente OC est affiliée au groupe de communication G1. Un serveur participant OP gère l'entité cliente OC au sein du groupe de communication G1 et un serveur non-contrôleur NC du groupe global de communication est en charge de la gestion du groupe de communication G1. Un deuxième serveur non-contrôleur NC' est en charge de la gestion du deuxième groupe de communication G2. Un serveur contrôleur C est en charge de la gestion du groupe global de communication GA. L'invention couvre aussi les variantes dans lesquelles le serveur contrôleur C du groupe global de communication GA est en charge de la gestion du groupe de communication G1 ou de la gestion du groupe de communication G2. Le deuxième serveur non-contrôleur NC' est relié au serveur contrôleur C. Un serveur participant terminal TP est relié au deuxième serveur non-contrôleur NC' et à une deuxième entité cliente terminale TC, le serveur participant terminal TP étant en charge de la gestion de la deuxième entité cliente terminale TC, la deuxième entité cliente terminale TC étant affiliée au groupe de communication G2.

A la Figure 5, les systèmes interconnectés par des passerelles ne sont pas représentés pour des questions de clarté. Les passerelles GW1-2, GW1-3 et GW2-3 ne sont pas non plus représentées pour des questions de clarté.

Le réseau de la Figure 5 comprend au moins un premier et un deuxième systèmes interconnectés par au moins une passerelle, par exemple de la même façon que représenté à la Figure 3. Le premier système S1 comprend au moins l'entité cliente OC et le serveur participant OP. Le deuxième système S2 comprend au moins le serveur contrôleur C du groupe global de communication GA.

Le serveur non-contrôleur NC peut être compris dans chacun des premier et deuxième systèmes, ou peut être compris dans un troisième système, comme représenté à la Figure 3.

L'invention couvre tout réseau selon le standard 3GPP MCS comprenant au moins deux systèmes séparés par une passerelle masquant ou supprimant des informations nécessaires à l'initiation d'une communication dans un groupe global de communication auquel sont affiliées des entités réparties dans les au moins deux systèmes.

Le procédé 1 selon l'invention représenté aux Figures 6 et 7 permet à l'entité cliente originelle OC d'initier une communication au sein du groupe global de communication GA, c'est-à-dire une communication avec au moins une autre entité cliente du groupe global de communication GA, par exemple avec la deuxième entité cliente C' membre d'un des groupes constituant regroupé dans le groupe global GA. Cette communication peut être une communication de type pré-arrangée ou chat.

Le procédé d'initiation de communication 1 selon l'invention comprend une première étape 11, identique à la première étape du procédé d'initiation de communication au sein d'un regroupement de groupes de communication de l'état de l'art. Dans cette première étape 31, la première entité cliente OC souhaitant initier une communication transmet, au serveur participant OP, un premier message d'invitation selon le protocole d'initiation de session SIP. Un message d'invitation selon le protocole SIP est un message de type « SIP INVITE ».

Le message d'invitation SIP INVITE 1 de l'étape 11 comprend au moins un champ d'en-tête comprenant une information de groupe constituant, l'information de groupe constituant identifiant le groupe de communication G1 auquel la première entité cliente OC est affiliée. Pour cela, le message SIP INVITE comprend un champ d'identifiant de groupe associé nommé <associated-group-id> défini dans le standard 3GPP MCS et prenant une valeur « constituent » indiquant le groupe constituant du groupe global de communication auquel est affilié l'entité cliente OC initiant la communication.

Le message d'invitation SIP INVITE 1 de l'étape 11 comprend en outre au moins un champ d'en-tête comprenant une information de groupe appelé, l'information de groupe appelé identifiant le groupe global de communication GA. Pour cela, le message SIP INVITE 1 comprend un champ de requête MCPTT (de l'anglais « Mission Critical Push To Talk » pour « Appuyer Pour Parler en Mission Critique » en français) nommé <mcptt-request-uri> défini dans le standard 3GPP MCS et prenant une valeur « regroup » indiquant le groupe global de communication GA au sein duquel l'entité cliente OC souhaite initier une communication.

Le procédé 1 selon l'invention comprend une deuxième étape 12 mise en œuvre par le serveur participant OP. Le serveur participant OP est un serveur appartenant au même groupe de communication G1 que l'entité cliente OC et gérant l'entité cliente OC au sein de ce groupe de communication G1. La deuxième étape 12 mise en œuvre par l'entité participante OP est une étape de sélection du serveur non-contrôleur NC du groupe de communication G1 auquel la première entité cliente OC est affiliée. En effet, l'invention se base notamment sur le fait que l'entité participante OP dispose d'informations suffisantes pour sélectionner directement ce serveur non-contrôleur NC. Cette sélection est réalisée par le serveur à partir de l'information de groupe constituant identifiant le groupe G1 reçue dans le message SIP INVITE 1, le serveur non-contrôleur NC sélectionné appartenant au groupe G1 identifié par l'information de groupe constituant. Grâce à cette information, le serveur participant OP peut router directement le message SIP INVITE 1 reçu au serveur non-contrôleur NC via le PSI du serveur non-contrôleur NC si le serveur non-contrôleur NC est dans le même système que le serveur participant OP, ou via au moins une passerelle si le serveur non-contrôleur NC est situé dans un autre système. En effet, dans un tel cas, la passerelle peut modifier le PSI du serveur participant OP, ce qui ne perturbe pas le procédé d'initiation de communication 1 selon l'invention. En effet, dans l'invention, le PSI du serveur participant OP n'est pas utilisé par la suite et la communication est tout de même établie, au contraire de l'état de l'art.

Le procédé 1 selon l'invention comprend ensuite une étape 13 de détermination, par le serveur participant OP, d'un identifiant du serveur non-contrôleur NC sélectionné. Cela est rendu possible par le fait que le serveur participant OP a connaissance de l'identité du serveur non-contrôleur NC en charge de la gestion du groupe G1 constituant du groupe global de communication GA. En effet, l'entité cliente OC est affiliée au groupe de communication G1. Si le groupe de communication G1 n'est pas regroupé dans le groupe global GA, alors l'entité cliente OC peut établir un appel "simple" vers le groupe de communication G1, que le serveur participant OP sait alors nécessairement router vers le serveur contrôleur du groupe G1. Si le groupe G1 est regroupé dans le groupe global GA, le serveur non-contrôleur NC à atteindre est le serveur en charge de la gestion du groupe constituant G1, qui n'est autre que le serveur non-contrôleur NC prenant alors un rôle non-contrôleur NC.

Après la détermination de l'identifiant du serveur non-contrôleur NC sélectionné, le serveur participant OP transmet dans une étape 14, au serveur non-contrôleur NC sélectionné, un message d'invitation SIP INVITE 3' selon le protocole d'initiation de session SIP. Ce message sera appelé « deuxième message d'invitation » car il est le deuxième message d'invitation du protocole 1 selon l'invention.

Le deuxième message d'invitation SIP INVITE 3' comprend au moins un champ d'en-tête comprenant une information de serveur destinataire, l'information de serveur destinataire comprenant l'identifiant du serveur non-contrôleur NC sélectionné. Pour cela, le champ est de type < Request URI > défini par le standard 3GPP MCS et peut prendre une valeur « determined NC PSI » indiquant le PSI déterminé à l'étape 13 du serveur non-contrôleur NC sélectionné à l'étape 12.

Le deuxième message d'invitation SIP INVITE 3' comprend aussi au moins un champ d'en-tête comprenant une information d'utilisateur originel, l'information d'utilisateur originel comprenant un identifiant de la première entité cliente OC. Pour cela, le message SIP INVITE 3' comprend un champ <calling-user-id> défini dans le standard 3GPP MCS et prenant une valeur indiquant un identifiant de l'entité cliente OC.

Dans un autre mode de réalisation de l'invention, le deuxième message d'invitation SIP INVITE 3' comprend en outre :
- au moins un champ d'en-tête comprenant l'information de groupe constituant, par exemple le même champ d'en-tête <associated-group-id> que le premier message d'invitation SIP INVITE 1,
- au moins un champ d'en-tête comprenant l'information de groupe appelé, par exemple le même champ d'en-tête <mcptt-request-uri> que le premier message d'invitation SIP INVITE 1.

Cela permet ensuite au serveur non-contrôleur NC de vérifier la cohérence de la requête de l'entité cliente OC et de vérifier que le groupe global GA au sein duquel l'entité cliente OC souhaite initier une communication comprend bien le groupe de communication G1 auquel est affilié l'entité cliente OC, comme sera décrit par la suite.

Le procédé 1 selon l'invention comprend ensuite une étape 15 de vérification, par le serveur non-contrôleur NC, que la première entité cliente OC est autorisée à initier la communication au sein du groupe global de communication GA à partir de l'information d'utilisateur originel reçue dans le deuxième message d'invitation SIP INVITE 3' du serveur participant OP. Cela est aussi représenté à la Figure 6 par la case « C2' ».

Dans l'autre mode de réalisation, c'est-à-dire dans le mode de réalisation dans lequel le deuxième message d'invitation SIP INVITE 3' comprend un champ d'entête comprenant l'information de groupe constituant et un champ d'en-tête comprenant l'information d'utilisateur originel, le serveur non-contrôleur NC vérifie à l'étape de vérification 15, à partir de ces deux informations, que la première entité cliente OC est bien affiliée au premier groupe de communication G1. En effet, le serveur non-contrôleur NC est le serveur en charge de gestion du groupe de communication G1. A ce titre, il gère les affiliations des utilisateurs à ce groupe G1.

Dans une variante à ce même autre mode de réalisation, compatible avec la vérification que la première entité cliente OC est bien affiliée au premier groupe de communication G1, le serveur non-contrôleur NC vérifie à l'étape de vérification 15, que le premier groupe de communication G1 est bien compris dans le groupe global de communication GA à partir de l'information de groupe constituant et de l'information de groupe appelé. Cela permet de s'assurer que l'entité cliente ne va pas initier une communication dans un groupe de regroupement qui aurait changé depuis l'étape 11. Une telle vérification n'est pas réalisée dans l'art antérieur, ce qui peut mener à une communication de l'entité cliente originelle OC au sein d'un regroupement de groupes au sein duquel elle ne souhaitait pas communiquer.

Le procédé 1 comprend ensuite une étape 16 de sélection, par le serveur participant non-contrôleur NC, du serveur contrôleur C du groupe global de communication GA. Cette sélection est réalisée notamment à partir de l'information de groupe appelé, identifiant le groupe global de communication GA. Comme le serveur non-contrôleur NC gère le premier groupe de communication G1, il sait que le premier groupe de communication G1 est regroupé en un groupe global de communication GA et a connaissance du serveur contrôleur C de ce groupe global de communication GA.

Le procédé 1 comprend ensuite une étape 17 de transmission, par le serveur non-contrôleur NC au serveur contrôleur C du groupe global de communication GA, d'un troisième message d'invitation SIP INVITE 4' selon le protocole d'initiation de session SIP. Ce troisième message d'invitation SIP INVITE 4' comprend :
- au moins un champ d'en-tête comprenant l'information de groupe constituant, par exemple le même champ d'en-tête <associated-group-id> que le premier message d'invitation SIP INVITE 1 et que le deuxième message d'invitation SIP INVITE 3',
- au moins un champ d'en-tête comprenant l'information de groupe appelé, par exemple le même champ d'en-tête <mcptt-request-uri> que le premier message d'invitation SIP INVITE 1 et que le deuxième message d'invitation SIP INVITE 3'.

Dans l'autre mode de réalisation, c'est-à-dire dans le mode de réalisation dans lequel le deuxième message d'invitation SIP INVITE 3' comprend un champ d'entête comprenant l'information de groupe constituant et un champ d'en-tête comprenant l'information d'utilisateur originel, le troisième message d'invitation SIP INVITE 4' comprend en outre au moins un champ d'en-tête comprenant l'information d'utilisateur originel. Cela permet par la suite au serveur contrôleur C d'inclure l'identifiant de l'entité cliente originelle OC dans l'invitation à participer à la communication, et donc aux autres entités clientes participant à la communication d'avoir l'identité de l'entité cliente originelle OC. Cela permet notamment aux autres entités clientes participant à la communication de savoir avec qui elles communiquent. Cela permet aussi au serveur contrôleur C d'inclure l'identité de la « Granted party » (« partie accordée » en français) dans un message « Floor taken » (pour « Parole prise » en français), si une demande implicite d'obtention de la parole (« Floor ») est utilisée.

Le procédé 1 selon l'invention comprend une dernière étape 18, non représentée à la Figure 6, d'invitation, par le serveur contrôleur C du groupe global de communication GA, de chaque entité cliente du groupe global de communication GA à participer à la communication. Cette invitation se base sur l'identifiant du groupe global de communication GA reçu dans l'information de groupe appelé.

Dans l'autre mode de réalisation, c'est-à-dire dans le mode de réalisation dans lequel le deuxième message d'invitation SIP INVITE 3' comprend un champ d'entête comprenant l'information de groupe constituant et un champ d'en-tête comprenant l'information d'utilisateur originel et dans lequel le troisième message d'invitation SIP INVITE 4' comprend en outre au moins un champ d'en-tête comprenant l'information d'utilisateur originel, le message d'invitation à l'étape 18 d'invitation comprend au moins un champ d'en-tête comprenant l'information d'utilisateur originel, pour qu'ils aient connaissance de l'identité de l'entité cliente originelle OC qui a initié la communication au sein du groupe global de communication OC.

## Revendications

1. Procédé d'initiation, par une première entité cliente, d'une communication au sein d'un groupe global de communication regroupant au moins un premier groupe de communication et au moins un deuxième groupe de communication, au moins une deuxième entité cliente étant affiliée au deuxième groupe de communication, le procédé étant mis en œuvre dans un réseau de communication selon le standard 3GPP MCS « 3rd Generation Partnership Program Mission-Critical System », le réseau comprenant au moins :
- la première entité cliente affiliée au premier groupe de communication,
- un serveur participant originel gérant la première entité cliente au sein du premier groupe de communication
- un serveur contrôleur étant en charge de la gestion du groupe global de communication,
- au moins un serveur non-contrôleur du groupe global de communication étant en charge de la gestion du premier groupe de communication,
la première entité cliente et le serveur participant originel étant compris dans au moins un premier système, le serveur contrôleur étant compris dans un deuxième système, le premier et le deuxième système étant séparés par au moins une passerelle, le procédé comprenant les étapes de :
- Transmission, par la première entité cliente au serveur participant, d'un premier message d'invitation selon le protocole d'initiation de session SIP, le message d'invitation comprenant :
∘ au moins un champ d'en-tête comprenant une information de groupe constituant, l'information de groupe constituant identifiant le groupe de communication auquel la première entité cliente est affiliée, et
∘ au moins un champ d'en-tête comprenant une information de groupe appelé, l'information de groupe appelé identifiant le groupe global de communication,
- Sélection, par le serveur participant, du serveur non-contrôleur du groupe de communication auquel la première entité cliente est affiliée, à **partir de** l'information de groupe constituant, le serveur non-contrôleur sélectionné appartenant au groupe identifié par l'information de groupe constituant,
- Détermination, par le serveur participant, d'un identifiant du serveur non-contrôleur sélectionné,
- Transmission, par le serveur participant au serveur non-contrôleur sélectionné, d'un deuxième message d'invitation selon le protocole d'initiation de session SIP, le message d'invitation comprenant :
∘ au moins un champ d'en-tête comprenant une information de serveur destinataire, l'information de serveur destinataire comprenant l'identifiant du serveur non-contrôleur sélectionné, et
o au moins un champ d'en-tête comprenant une information d'utilisateur originel, l'information d'utilisateur originel comprenant un identifiant de la première entité cliente,
∘ au moins un champ d'en-tête comprenant l'information de groupe constituant,
∘ au moins un champ d'en-tête comprenant l'information de groupe appelé,
- Vérification, par le serveur non-contrôleur, que la première entité cliente est autorisée à initier la communication au sein du groupe global de communication à partir de l'informations d'utilisateur originel,
- Sélection, par le serveur participant non-contrôleur, du serveur contrôleur du groupe global de communication,
- Transmission, par le serveur non-contrôleur au serveur contrôleur, d'un troisième message d'invitation selon le protocole d'initiation de session SIP le message d'invitation comprenant :
∘ au moins un champ d'en-tête comprenant l'information de groupe constituant,
∘ au moins un champ d'en-tête comprenant l'information de groupe appelé.
- Invitation, par le serveur contrôleur du groupe global de communication, de chaque entité cliente du groupe global de communication à participer à la communication à partir de l'information de groupe appelé.

2. Procédé selon la revendication précédente **caractérisé en ce que** le serveur contrôleur est compris dans un troisième système, le premier et le troisième système étant séparés par une deuxième passerelle, le deuxième et le troisième système étant séparés par une troisième passerelle.

3. Procédé selon l'une quelconque des revendications précédentes **caractérisé en ce que** l'étape de vérification se base en outre sur l'information de groupe constituant et sur l'information de groupe appelé.

4. Procédé selon la revendication précédente **caractérisé en ce que** l'étape de vérification par le serveur non-contrôleur comprend en outre au moins la vérification que la première entité cliente est bien affiliée au premier groupe de communication à partir de l'information de groupe constituant et de l'information d'utilisateur originel.

5. Procédé selon l'une des revendications 3 ou 4 **caractérisé en ce que** l'étape de vérification par le serveur non-contrôleur comprend en outre au moins la vérification que le premier groupe de communication est compris dans le groupe global de communication à partir de l'information de groupe constituant et de l'information de groupe appelé.

6. Procédé selon l'une quelconque des revendications précédentes **caractérisé en ce que** le troisième message d'invitation selon le protocole d'initiation de session SIP comprend en outre au moins un champ d'en-tête comprenant l'information d'utilisateur originel.

7. Procédé selon la revendication précédente **caractérisé en ce que** l'étape d'invitation par le serveur contrôleur du groupe global de communication, de chaque entité cliente du groupe global de communication à participer à la communication à partir de l'information de groupe appelé comprend au moins un champ d'en-tête comprenant l'information d'utilisateur originel.

8. Réseau de communication selon le standard 3GPP MCS « 3rd Generation Partnership Program Mission-Critical System », le réseau de communication étant formé par au moins :
- un premier système comprenant au moins une première entité cliente et au moins un serveur participant,
- un deuxième système comprenant au moins un serveur contrôleur d'un groupe global de communication,
le réseau comprenant le groupe global de communication formé par au moins un premier groupe de communication et au moins un deuxième groupe de communication,
- la première entité cliente étant affiliée au premier groupe de communication,
- le serveur participant originel gérant la première entité cliente au sein du premier groupe de communication,
- le serveur contrôleur étant en charge de la gestion du groupe global de communication,
- au moins un serveur non-contrôleur du groupe global de communication compris dans le réseau étant en charge de la gestion du premier groupe de communication,
le premier et le deuxième système étant séparés par au moins une passerelle, le réseau de communication étant configuré pour mettre en œuvre le procédé d'initiation de communication selon l'une quelconque des revendications précédentes.

9. Réseau selon la revendication 8 **caractérisé en ce qu'**il comprend un troisième système, le serveur contrôleur étant compris dans le troisième système, le premier et le troisième système étant séparés par une deuxième passerelle, le deuxième et le troisième système étant séparés par une troisième passerelle.

## Patentansprüche

1. Verfahren zum Initiieren einer Kommunikation durch eine erste Kundeneinheit innerhalb einer globalen Kommunikationsgruppe, die mindestens eine erste Kommunikationsgruppe und mindestens eine zweite Kommunikationsgruppe umfasst, wobei mindestens eine zweite Kundeneinheit der zweiten Kommunikationsgruppe angehört und das Verfahren in einem Kommunikationsnetz gemäß dem 3GPP-MCS-Standard "3rd Generation Partnership Program Mission-Critical System" durchgeführt wird, wobei das Netzwerk mindestens umfasst:
- die der ersten Kommunikationsgruppe angehörende erste Kundeneinheit,
- einen ursprünglichen Teilnehmerserver, der die erste Kundeneinheit innerhalb der ersten Kommunikationsgruppe verwaltet,
- einen Kontrollserver, der für die Verwaltung der globalen Kommunikationsgruppe zuständig ist,
- mindestens einen Nicht-Kontrollserver der globalen Kommunikationsgruppe, der für die Verwaltung der ersten Kommunikationsgruppe zuständig ist,
wobei die erste Kundeneinheit und der ursprüngliche Teilnehmerserver in mindestens einem ersten System enthalten sind, der Kontrollserver in einem zweiten System enthalten ist und das erste und das zweite System durch mindestens ein Gateway voneinander getrennt sind, wobei das Verfahren die folgenden Schritte umfasst:
- Übertragung einer ersten Einladungsnachricht gemäß dem SIP-Sitzungsinitiierungsprotokoll durch die erste Kundeneinheit an den Teilnehmerserver, wobei die Einladungsnachricht Folgendes umfasst:
∘ mindestens ein Header-Feld, das eine Information der Kerngruppe enthält, wobei die Information der Kerngruppe die Kommunikationsgruppe identifiziert, der die erste Kundeneinheit angehört, und
∘ mindestens ein Header-Feld, das eine Information der angerufenen Gruppe enthält, wobei die Information der angerufenen Gruppe die globale Kommunikationsgruppe identifiziert,
- Auswahl des Nicht-Kontrollservers der Kommunikationsgruppe, der die erste Kundeneinheit angehört, durch den Teilnehmerserver anhand der Information der Kerngruppe, wobei der ausgewählte Nicht-Kontrollserver zu der durch die Information der Kerngruppe identifizierte Gruppe gehört,
- Ermittlung einer Kennung des ausgewählten Nicht-Kontrollservers durch den Teilnehmerserver,
- Übertragung einer zweiten Einladungsnachricht gemäß dem SIP-Sitzungsinitiierungsprotokoll durch den Teilnehmerserver an den ausgewählten Nicht-Kontrollserver, wobei die Einladungsnachricht Folgendes umfasst:
∘ mindestens ein Header-Feld, das eine Zielserver-Information enthält, wobei die Zielserver-Information die Kennung des ausgewählten Nicht-Kontrollservers enthält, und
∘ mindestens ein Header-Feld, das Informationen zum ursprünglichen Benutzer enthält, wobei die Informationen zum ursprünglichen Benutzer eine Kennung der ersten Kundeneinheit enthalten,
∘ mindestens ein Header-Feld, das die Information der Kerngruppe enthält,
∘ mindestens ein Header-Feld, das die Information der angerufenen Gruppe enthält,
- Überprüfung durch den Nicht-Kontrollserver, ob die erste Kundeneinheit berechtigt ist, die Kommunikation innerhalb der globalen Kommunikationsgruppe zu initiieren, basierend auf den Informationen des ursprünglichen Benutzers,
- Auswahl des Kontrollservers der globalen Kommunikationsgruppe durch den nicht als Kontrollserver fungierenden Teilnehmerserver,
- Übertragung einer dritten Einladungsnachricht gemäß dem SIP-Protokoll zur Sitzungsinitiierung durch den Nicht-Kontrollserver an den Kontrollserver, wobei die Einladungsnachricht Folgendes umfasst:
∘ mindestens ein Header-Feld, das die Information der Kerngruppe enthält,
∘ mindestens ein Header-Feld, das die Information der angerufenen Gruppe enthält.
- Einladung jeder Kundeneinheit der globalen Kommunikationsgruppe durch den Kontrollserver der globalen Kommunikationsgruppe zur Teilnahme an der Kommunikation auf der Grundlage der Informationen der angerufenen Gruppe.

2. Verfahren nach dem vorstehenden Anspruch, **dadurch gekennzeichnet, dass** der Kontrollserver in einem dritten System enthalten ist, wobei das erste und das dritte System durch ein zweites Gateway getrennt sind und das zweite und das dritte System durch ein drittes Gateway getrennt sind.

3. Verfahren nach einem der vorstehenden Ansprüche, **dadurch gekennzeichnet, dass** der Überprüfungsschritt sich zudem auf die Information der Kerngruppe und auf die Information der angerufenen Gruppe stützt.

4. Verfahren nach dem vorstehenden Anspruch, **dadurch gekennzeichnet, dass** der Überprüfungsschritt durch den Nicht-Kontrollserver ferner mindestens die Überprüfung umfasst, ob die erste Kundeneinheit tatsächlich der ersten Kommunikationsgruppe angehört, und zwar anhand der Information der Kerngruppe und der Informationen zum ursprünglichen Benutzer.

5. Verfahren nach einem der Ansprüche 3 oder 4, **dadurch gekennzeichnet, dass** der Überprüfungsschritt durch den Nicht-Kontrollserver ferner mindestens die Überprüfung umfasst, ob die erste Kommunikationsgruppe in der globalen Kommunikationsgruppe enthalten ist, und zwar anhand der Informationen der Kerngruppe und der angerufenen Gruppe.

6. Verfahren nach einem der vorstehenden Ansprüche, **dadurch gekennzeichnet, dass** die dritte Einladungsnachricht gemäß dem SIP-Sitzungsinitiierungsprotokoll ferner mindestens ein Header-Feld umfasst, das die Informationen des ursprünglichen Benutzers enthält.

7. Verfahren nach dem vorstehenden Anspruch, **dadurch gekennzeichnet, dass** der Schritt der Einladung durch den Kontrollserver der globalen Kommunikationsgruppe an jede Kundeneinheit der globalen Kommunikationsgruppe zur Teilnahme an der Kommunikation auf der Grundlage der Informationen der angerufenen Gruppe mindestens ein Header-Feld umfasst, das die Informationen des ursprünglichen Benutzers enthält.

8. Kommunikationsnetz gemäß dem 3GPP-MCS-Standard "3rd Generation Partnership Program Mission-Critical System", wobei das Kommunikationsnetz mindestens aus folgenden Komponenten besteht:
- einem ersten System, das mindestens eine erste Kundeneinheit und mindestens einen Teilnehmerserver umfasst,
- einem zweiten System, das mindestens einen Kontrollserver einer globalen Kommunikationsgruppe umfasst,
wobei das Netzwerk die globale Kommunikationsgruppe umfasst, die aus mindestens einer ersten Kommunikationsgruppe und mindestens einer zweiten Kommunikationsgruppe gebildet wird,
- wobei die erste Kundeneinheit der ersten Kommunikationsgruppe angehört,
- wobei der ursprüngliche Teilnehmerserver die erste Kundeneinheit innerhalb der ersten Kommunikationsgruppe verwaltet,
- wobei der Kontrollserver für die Verwaltung der globalen Kommunikationsgruppe zuständig ist,
- wobei mindestens ein Nicht-Kontrollserver der globalen Kommunikationsgruppe, der Teil des Netzwerks ist, für die Verwaltung der ersten Kommunikationsgruppe zuständig ist,
wobei das erste und das zweite System durch mindestens ein Gateway voneinander getrennt sind, wobei das Kommunikationsnetzwerk so gestaltet ist, dass es das Verfahren zur Initiierung einer Kommunikation gemäß einem der vorstehenden Ansprüche ausführt.

9. Netzwerk nach Anspruch 8, **dadurch gekennzeichnet, dass** es ein drittes System umfasst, wobei der Kontrollserver in dem dritten System enthalten ist, wobei das erste und das dritte System durch ein zweites Gateway getrennt sind und das zweite und das dritte System durch ein drittes Gateway getrennt sind.

## Claims

1. A method for initiating, by a first client entity, a communication within a global communication group comprising a least a first communication group and a least a second communication group, a least a second client entity being affiliated to the second communication group, the method being implemented in a communication network according to the 3GPP MCS "3rd Generation Partnership Program Mission-Critical System" standard, the network comprising at least:
- the first client entity affiliated to the first communication group,
- an originating participating server managing the first client entity within the first communication group,
- a controlling server being in charge of managing the global communication group,
- at least one non-controlling server of the global communication group being in charge of managing the first communication group,
the first client entity and the originating participating server being included in at least a first system, the controlling server being included in a second system, the first and second systems being separated by at least one gateway, the method comprising the steps of:
- Transmitting, by the first client entity to the participating server, a first invite message according to the session initiation protocol SIP, the invite message comprising:
∘ at least one header field comprising constituent group information, the constituent group information identifying the communication group to which the first client entity is affiliated, and
∘ at least one header field comprising called group information, the called group information identifying the global communication group,
- Selecting, by the participating server, the non-controlling server of the communication group to which the first client entity is affiliated, from the constituent group information, the selected non-controlling server belonging to the group identified by the constituent group information,
- Determining, by the participating server, an identifier of the selected non-controlling server,
- Transmitting, by the participating server, to the selected non-controlling server, a second invite message according to the session initiation protocol SIP, the invite message comprising:
∘ at least one header field comprising recipient server information, the recipient server information comprising the identifier of the selected non-controlling server, and
∘ at least one header field comprising originating user information, the originating user information comprising an identifier of the first client entity,
∘ at least one header field comprising the constituent group information,
∘ at least one header field comprising the called group information,
- Checking, by the non-controlling server, that the first client entity is allowed to initiate the communication within the global communication group from the originating user information,
- Selecting, by the non-controlling participating server, the controlling server of the global communication group,
- Transmitting, by the non-controlling server to the controlling server, a third invite message according to the session initiation protocol SIP, the invite message comprising:
∘ at least one header field comprising the constituent group information,
∘ at least one header field comprising the called group information.
- Inviting, by the controlling server of the global communication group, each client entity of the global communication group to participate in the communication from the called group information.

2. The method according to the preceding claim **characterised in that** the controlling server is included in a third system, the first and third systems being separated by a second gateway, the second and third systems being separated by a third gateway.

3. The method according to any of the preceding claims **characterised in that** the checking step is further based on the constituent group information and the called group information.

4. The method according to the preceding claim **characterised in that** the checking step by the non-controlling server further comprises at least checking that the first client entity is indeed affiliated to the first communication group from the constituent group information and the originating user information.

5. The method according to one of claims 3 or 4 **characterised in that** the checking step by the non-controlling server further comprises at least checking that the first communication group is included in the global communication group from the constituent group information and the called group information.

6. The method according to any of the preceding claims **characterised in that** the third invite message according to the session initiation protocol SIP further comprises at least one header field comprising the originating user information.

7. The method according to the preceding claim **characterised in that** the step of inviting by the controlling server of the global communication group, each client entity of the global communication group to participate in the communication from the called group information comprises at least one header field comprising the originating user information.

8. A communication network according to the 3GPP MCS "3rd Generation Partnership Program Mission-Critical System" standard, the communication network being formed by at least:
- a first system comprising at least a first client entity and at least one participating server,
- a second system comprising at least one controlling server of a global communication group,
the network comprising the global communication group formed by a least a first communication group and a least a second communication group,
- the first client entity being affiliated to the first communication group,
- the originating participating server managing the first client entity within the first communication group,
- the controlling server being in charge of managing the global communication group,
- at least one non-controlling server of the global communication group included in the network being in charge of managing the first communication group,
the first and second systems being separated by at least one gateway, the communication network being configured to implement the communication initiation method according to any of the preceding claims.

9. The network according to claim 8 **characterised in that** it comprises a third system, the controlling server being included in the third system, the first and third systems being separated by a second gateway, the second and third systems being separated by a third gateway.
